# EUROPEAN PATENT SPECIFICATION

(11) **EP 4 030 747 B1**
(45) Date of publication and mention of the grant of the patent: **16.04.2025**
(21) Application number: 20863881.7
(22) Date of filing: 11.08.2020
(51) Int. Cl.: G06V 40/00, G06V 10/24, G06V 40/16, H04N 23/61, H04N 23/661, H04N 23/63, H04N 23/60

(54) **IMAGE ANALYSIS DEVICE, CONTROL METHOD, AND PROGRAM**
BILDANALYSEVORRICHTUNG, STEUERVERFAHREN UND PROGRAMM
DISPOSITIF D'ANALYSE D'IMAGE, PROCÉDÉ DE COMMANDE, ET PROGRAMME

(30) Priority: 12.09.2019 JP 2019166160
(43) Date of publication of application: 20.07.2022
(73) Proprietor: NEC Corporation, 108-8001 Tokyo (JP)
(72) Inventor: AOYAGI, Toru, Tokyo 108-8001 (JP); TSUJI, Yasunari, Tokyo 108-8001 (JP); IMANISHI, Yoshiko, Tokyo 108-8001 (JP)
(74) Representative: Betten & Resch
(86) International application number: PCT/JP2020/030616
(87) International publication number: WO 2021/049234

(56) References cited:
- WO-A1-2019/076115
- JP-B1- 6 481 073
- US-A1- 2019 205 686

## Description

### TECHNICAL FIELD

The present invention relates to an analysis of an image of an identification card.

### BACKGROUND ART

When opening a bank account, creating a credit card, and the like, personal identification using an identification card is performed. Then, when opening an account and the like via the Internet, and the like, an image acquired by capturing an identification card by a camera instead of an original of the identification card may be used for personal identification.

In a case where personal identification is performed by using an image of an identification card, spoofing needs to be prevented. PTL 1 discloses a system for confirming that a personal identification document is a user's by comparing capturing data about a face photograph of the personal identification document with capturing data about the user.

Further, in the system in PTL 1, while an instruction such as "capture a front surface of a personal identification document" and "capture a back surface of a personal identification document" is provided in a user terminal in order to acquire an image of a plurality of surfaces of the personal identification document (identification card), a video in which the personal identification document is captured is generated. Then, the video is transmitted to an authentication server.

Herein, a timing of the instruction described above is predetermined by a relative time from start time of capturing a video. The authentication server uses, as an image of the front surface and the back surface of the personal identification document, an image associated with a timing of each instruction (i.e., an image at a predetermined timing starting from a point in start time of capturing a video) from the received video.

The document US 2019 020 5686 A1 discloses methods, systems, and apparatus, including computer programs encoded on a computer storage medium, for obtaining, in real-time from an image capture device, a video stream comprising images of a document by a computing device. The computing device provides, for display in an image preview window, the video stream overlaid with a graphical capture guide. In response to detecting a lighting artifact in at least one image of the video stream, the computing device modifies the graphical capture guide within the image preview window. The computing device captures one or more of the images of the document from the video stream.

The document JP 6 481 073 B discloses a program causing an information processing apparatus including a display unit to execute a step of displaying a moving image of a shooting area output to the display unit by a shooting device, a step of displaying a shooting guide indicating a shooting method of the side surface of a personal identification document on the moving image of the shooting area according to information indicating a position and an inclination in the shooting area determined on the basis of a predetermined logic, and a step of causing the shooting device to shoot the moving image of the shooting area.

The document EP 3 522 072 A1 discloses first, obtaining an identity certificate image of an object to be verified; then, verifying whether the identity certificate image comes from the same shooting scene as a first background image that is collected on site in advance and/or whether the identity certificate image comes from a physical certificate to obtain a first verification result; simultaneously verifying the authenticity of identity information in the identity certificate image to obtain a second verification result; and finally, determining an identity verification result of the object to be verified, based on the first verification result and the second verification result.

### RELATED DOCUMENT

### -PATENT DOCUMENT

[PTL 1] Japanese Patent No. 6541140

### SUMMARY OF THE INVENTION

### TECHNICAL PROBLEM

In the system in PTL 1, whether an image of a personal identification document (for example, an image of a front surface or an image of a back surface) captured in a desired state is included in a video transmitted from a user terminal to an authentication server is determined in the authentication server. Thus, the image of the personal identification document captured in the desired state may not be included in the video received by the authentication server. In this case, an authentication error is transmitted to the user terminal, and a video needs to be captured again in the user terminal.

The present invention has been made in view of the problem described above, and one of objects of the present invention is to provide a technique for increasing a probability that an image of an identification card captured in a desired state is provided.

### SOLUTION TO PROBLEM

The invention is defined by a program causing a computer to execute the processing according to claim 1, an image analysis apparatus according to claim 6 and a control method according to claim 11.

The dependent claims define further advantageous details of the invention.

### ADVANTAGEOUS EFFECTS OF INVENTION

The present invention provides a technique for increasing a probability that an image of an identification card captured in a desired state is provided.

### BRIEF DESCRIPTION OF THE DRAWINGS

[Fig. 1] Fig. 1 is a diagram for describing an outline of an image analysis apparatus according to an example embodiment 1 of the present invention.
[Fig. 2] Fig. 2 is a plan view representing a scene in which an identification card is captured at an angle X by using a camera.
[Fig. 3] Fig. 3 is a diagram illustrating a functional configuration of an image analysis apparatus according to the example embodiment 1.
[Fig. 4] Fig. 4 is a diagram illustrating a computer for achieving the image analysis apparatus.
[Fig. 5] Fig. 5 is a flowchart illustrating a flow of processing performed by the image analysis apparatus according to the example embodiment 1.
[Fig. 6] Fig. 6 is a diagram illustrating a usage environment of the image analysis apparatus.
[Fig. 7] Fig. 7 is a block diagram illustrating a functional configuration of an image analysis apparatus according to an example embodiment 2.
[Fig. 8] Fig. 8 is a flowchart illustrating a flow of processing performed by the image analysis apparatus according to the example embodiment 2.
[Fig. 9] Fig. 9 is a diagram illustrating a guide output from a guide output unit.

### DESCRIPTION OF EMBODIMENTS

Hereinafter, example embodiments of the present invention will be described with reference to the drawings. Note that, in all of the drawings, a similar component has a similar reference sign, and description thereof will be appropriately omitted. Further, in each block diagram, each block represents a configuration of a functional unit instead of a configuration of a hardware unit unless otherwise described.

### [Example Embodiment 1]

### <Outline>

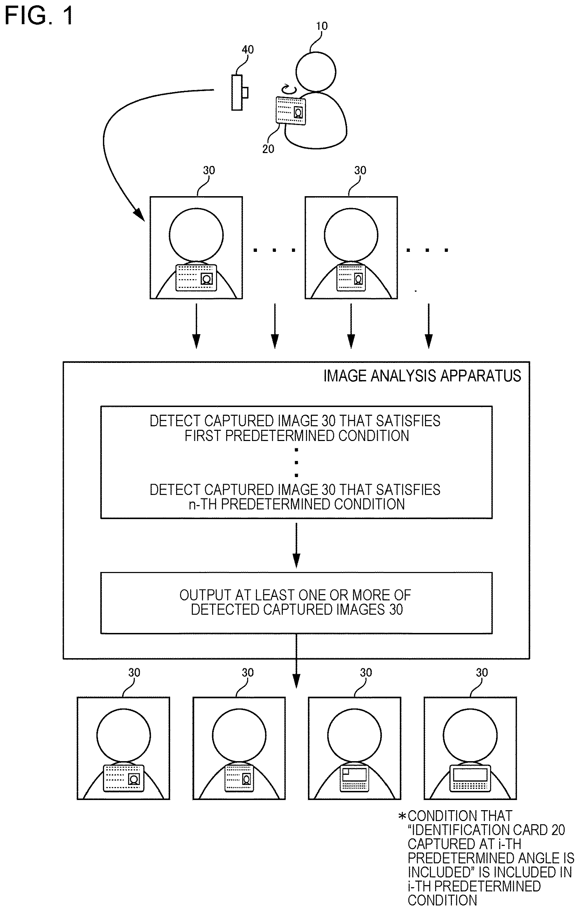

Fig. 1 is a diagram for describing an outline of an image analysis apparatus 2000 according to the present example embodiment. Note that, Fig. 1 is exemplification for facilitating understanding of the image analysis apparatus 2000, and a function of the image analysis apparatus 2000 is not limited to that represented in Fig. 1.

The image analysis apparatus 2000 performs an analysis of a plurality of captured images 30 including an identification card 20 of a user 10. A camera 40 is a camera that generates the captured image 30. The camera 40 generates a time-series of the captured images 30 by repeatedly capturing the identification card 20 of the user 10. For example, a time-series of the captured images 30 constitute one video. The identification card 20 is any certificate usable for proving person's identity. For example, the identification card 20 is a driver's license, another license, a passport, various certificates, a student's identification card, an identification card of a company, a health insurance card, or the like.

The captured image 30 is used for proving identity of the user 10. For example, there is a case where an image including an identification card instead of an original of the identification card is required to be provided. As an example, there is a case where a procedure of opening a bank account, creating a credit card, and the like via the Internet is performed. In such a case, it is difficult to provide an original of an identification card. Thus, personal identification of the user 10 is performed by using image data (such as the captured image 30 described above) acquired by capturing an identification card.

When personal identification is performed by using image data about an identification card in such a manner, a method of specifying, by a user, image data about a main surface (a surface on which main information is described) of the identification card or image data about a surface (hereinafter, a back surface) on a back side of the main surface, and performing personal identification by using the image data specified by the user is conceivable. However, it is difficult for this method to prevent unauthorized use of an identification card. For example, once a user can acquire copies of a main surface and a back surface of an identification card of another person by some sort of method, the user can spoof to be the another person by providing image data in which the copies are captured by a camera.

**In** order to handle such a problem, the image analysis apparatus 2000 confirms that the identification card 20 is captured at n kinds (n is an integer equal to or greater than two) of angles, and then outputs the captured image 30 including the identification card 20. Specifically, the image analysis apparatus 2000 detects, for each of n predetermined conditions, the captured image 30 that satisfies the predetermined condition. **In** other words, the image analysis apparatus 2000 detects each of the captured image 30 that satisfies a first predetermined condition, the captured image 30 that satisfies a second predetermined condition, ..., and the captured image 30 that satisfies an n-th predetermined condition. Hereinafter, processing of detecting the captured image 30 that satisfies an i-th predetermined condition (i is an integer that satisfies 1 ≤ i ≤ n) is referred to as i-th detection processing.

The i-th predetermined condition includes a condition that the "identification card 20 captured at an i-th predetermined angle is included in the captured image 30". Thus, in first detection processing to n-th detection processing, the captured image 30 including the identification card 20 captured at a first predetermined angle, the captured image 30 including the identification card 20 captured at a second predetermined angle, ..., and the captured image 30 including the identification card 20 captured at an n-th predetermined angle are each detected. Note that, it is assumed that 0° ≤ first predetermined angle < second predetermined angle < ... < n-th predetermined angle < 360°. In this way, by detecting the captured image 30 that satisfies each of the n predetermined conditions, it can be confirmed that the identification card 20 is captured at the n kinds of angles.

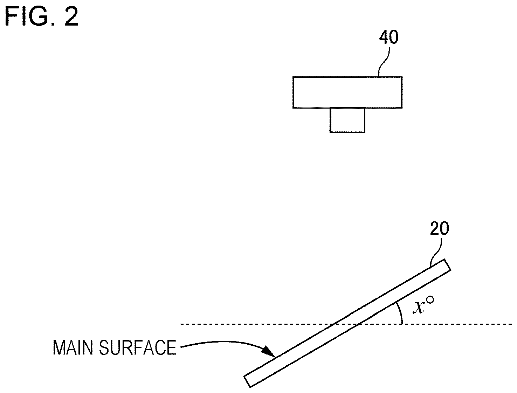

Fig. 2 is a plan view representing a scene in which the identification card 20 is captured at an angle X by using the camera 40. As illustrated in Fig. 2, the "identification card 20 is captured at the angle X" means that the "main surface of the identification card 20 is rotated by the angle X from a state where the main surface of the identification card 20 faces the front of the camera 40, and the identification card 20 is captured in that state". Thus, in a case of 0°, the main surface of the identification card 20 is captured, in a case of 180°, the back surface of the identification card 20 is captured, and, in cases of 90° and 270°, a side surface of the identification card 20 is captured.

When all of the captured image 30 that satisfies the first predetermined condition to the captured image 30 that satisfies the n-th predetermined condition are detected, the image analysis apparatus 2000 outputs one or more of the n captured images 30 being detected. In other words, one or more of the captured image 30 including the identification card 20 captured at the first predetermined angle, the captured image 30 including the identification card 20 captured at the second predetermined angle, ..., and the captured image 30 including the identification card 20 captured at the n-th predetermined angle are output.

### <Representative Advantageous Effect>

The image analysis apparatus 2000 according to the present example embodiment confirms that the identification card 20 is captured at n kinds of angles, and then outputs the captured image 30 including the identification card 20. Thus, as compared to a case where an image of the identification card 20 is output without performing such confirmation, a probability that an image of the identification card 20 captured in a desired state is included in the captured image 30 to be output can be increased. Thus, when the captured image 30 output from the image analysis apparatus 2000 is used for personal identification of the user 10, the captured image 30 needed for the personal identification can be more reliably acquired from the image analysis apparatus 2000.

Hereinafter, the present example embodiment will be described in more detail.

### <Example of Functional Configuration>

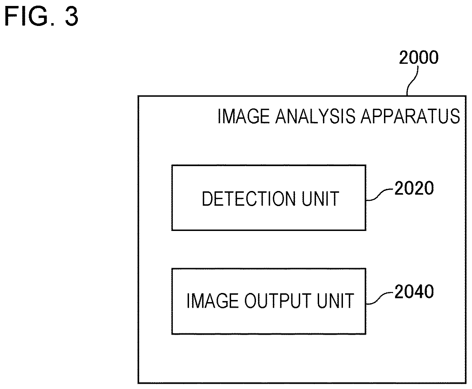

Fig. 3 is a diagram illustrating a functional configuration of the image analysis apparatus 2000 according to an example embodiment 1. The image analysis apparatus 2000 includes a detection unit 2020 and an image output unit 2040. The detection unit 2020 performs each i-th detection processing described above. Herein, as described above, since 1 ≤ i ≤ n and n ≥ 2, the detection unit 2020 performs at least the first detection processing of detecting the captured image 30 that satisfies the first predetermined condition and the second detection processing of detecting the captured image 30 that satisfies the second predetermined condition. The image output unit 2040 outputs one or more of the plurality of captured images 30 detected by the detection unit 2020.

### <Example of Hardware Configuration of Image Analysis Apparatus 2000>

Each functional component unit of the image analysis apparatus 2000 may be achieved by hardware (for example, a hard-wired electronic circuit, and the like) that achieves each functional component unit, and may be achieved by a combination of hardware and software (for example, a combination of an electronic circuit and a program that controls the electronic circuit, and the like). Hereinafter, a case where each functional component unit of the image analysis apparatus 2000 is achieved by the combination of hardware and software will be further described.

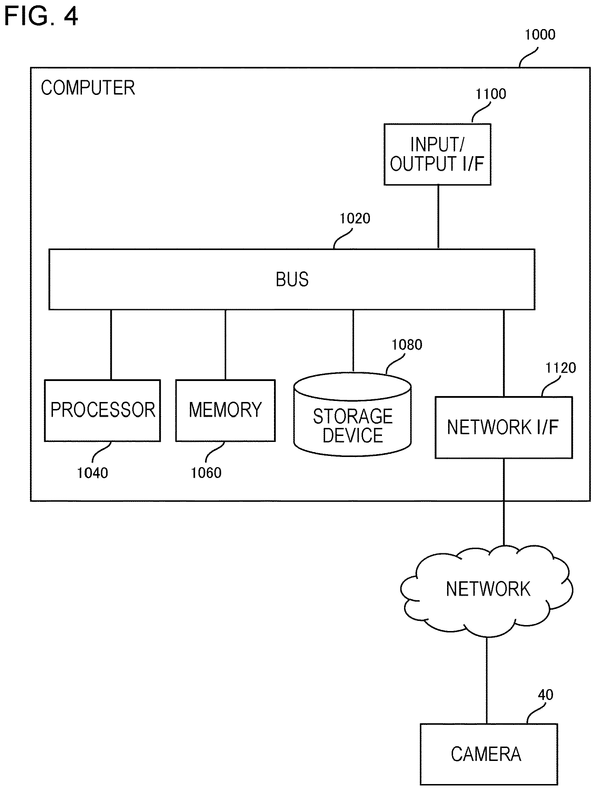

Fig. 4 is a diagram illustrating a computer 1000 for achieving the image analysis apparatus 2000. The computer 1000 is any computer. For example, the computer 1000 is a portable computer such as a smartphone and a tablet terminal. In addition, for example, the computer 1000 may be a stationary computer such as a personal computer (PC) and a server machine.

The computer 1000 may be a dedicated computer designed for achieving the image analysis apparatus 2000, and may be a general-purpose computer. In the latter case, for example, a function of the image analysis apparatus 2000 is achieved in the computer 1000 by installing a predetermined application into the computer 1000. The application described above is formed of a program for achieving each functional component unit of the image analysis apparatus 2000. In other words, the program causes the computer 1000 to execute each of processing performed by the detection unit 2020 and processing performed by the image output unit 2040.

The computer 1000 includes a bus 1020, a processor 1040, a memory 1060, a storage device 1080, an input/output interface 1100, and a network interface 1120. The bus 1020 is a data transmission path for allowing the processor 1040, the memory 1060, the storage device 1080, the input/output interface 1100, and the network interface 1120 to transmit and receive data with one another. However, a method of connecting the processor 1040 and the like to each other is not limited to bus connection.

The processor 1040 is various types of processors such as a central processing unit (CPU), a graphics processing unit (GPU), and a field-programmable gate array (FPGA). The memory 1060 is a main storage apparatus achieved by using a random access memory (RAM) and the like. The storage device 1080 is an auxiliary storage apparatus achieved by using a hard disk, a solid state drive (SSD), a memory card, a read only memory (ROM), or the like.

The input/output interface 1100 is an interface for connecting the computer 1000 and an input/output device. For example, an input apparatus such as a keyboard and an output apparatus such as a display apparatus are connected to the input/output interface 1100.

In addition, for example, the camera 40 is connected to the input/output interface 1100. In this way, each captured image 30 generated by the camera 40 is input to the computer 1000. The captured image 30 is stored in the memory 1060 and the storage device 1080.

The network interface 1120 is an interface for connecting the computer 1000 to a communication network. The communication network is, for example, a local area network (LAN) and a wide area network (WAN).

The storage device 1080 stores a program module (a program module that achieves the application described above) that achieves each functional component unit of the image analysis apparatus 2000. The processor 1040 achieves a function associated with each program module by reading each of the program modules to the memory 1060 and executing the program module.

### <With Regard to Camera 40>

The camera 40 is any camera that generates image data (the captured image 30) representing a result of capturing by performing capturing. For example, the camera 40 is a camera mounted on a smartphone, a tablet terminal, a notebook PC, or the like. However, the camera 40 may be a camera externally attached to the image analysis apparatus 2000.

### <Flow of Processing>

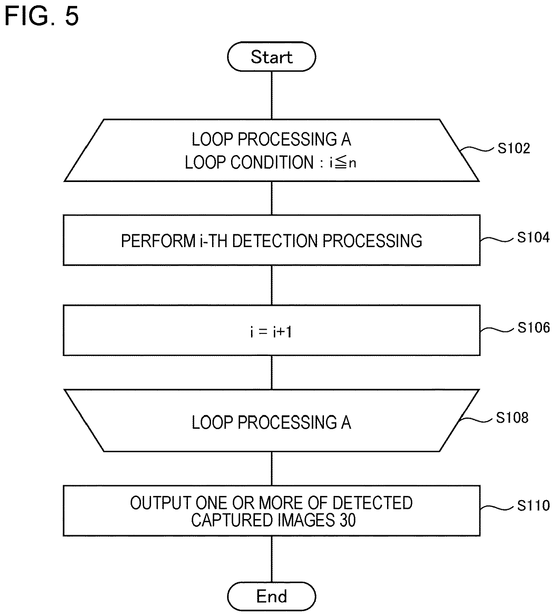

Fig. 5 is a flowchart illustrating a flow of processing performed by the image analysis apparatus 2000 according to the example embodiment 1. S102 to S108 are loop processing of performing the first detection processing to the n-th detection processing. In S102, the detection unit 2020 determines whether i ≤ n is satisfied. Note that, an initial value of i is 1.

When i ≤ n is satisfied, the processing in Fig. 5 proceeds to S104. On the other hand, when i ≤ n is not satisfied, the processing in Fig. 5 proceeds to S110.

In S104, the image output unit 2040 detects the captured image 30 that satisfies the i-th predetermined condition (performs the i-th detection processing). The detection unit 2020 adds 1 to i (S106). Since S108 is an end of the loop processing A, the processing in Fig. 5 proceeds to S102.

When the processing in Fig. 5 reaches S110, the image output unit 2040 outputs one or more of the n captured images 30 being detected.

Herein, the flowchart in Fig. 5 does not illustrate processing when the captured image 30 that satisfies the i-th predetermined condition is not detected in the i-th detection processing. Processing performed by the image analysis apparatus 2000 when the captured image 30 that satisfies the i-th predetermined condition is not detected in the i-th detection processing is optional. For example, the image analysis apparatus 2000 may end the processing illustrated in Fig. 5. In other words, in this case, an output of the captured image 30 is not performed. Herein, before the image analysis apparatus 2000 ends the processing illustrated in Fig. 5, the image analysis apparatus 2000 may output a warning message indicating that the captured image 30 that satisfies a predetermined condition is not detected (i.e., that capturing of the identification card 20 is not properly performed), and the like.

In addition, for example, when the captured image 30 that satisfies the i-th predetermined condition is not detected in the i-th detection processing, the image analysis apparatus 2000 may output a warning message and the like that capturing of the identification card 20 needs to be properly performed in such a way as to satisfy the i-th predetermined condition (for example, that the identification card 20 needs to be captured at the i-th predetermined angle), and then may perform the i-th detection processing again.

Note that, a condition for ending the i-th detection processing in a situation where the captured image 30 that satisfies the i-th predetermined condition is not detected is optional. For example, the detection unit 2020 ends the i-th detection processing when a predetermined period of time has elapsed since the i-th detection processing starts, or when the i-th detection processing is performed on, as a target, a predetermined number or more of the captured images 30.

### <Example of Usage Environment of Image Analysis Apparatus 2000>

In order to make the following description clear, a more specific usage environment of the image analysis apparatus 2000 will be illustrated. However, a usage environment of the image analysis apparatus 2000 is not limited to the example described herein.

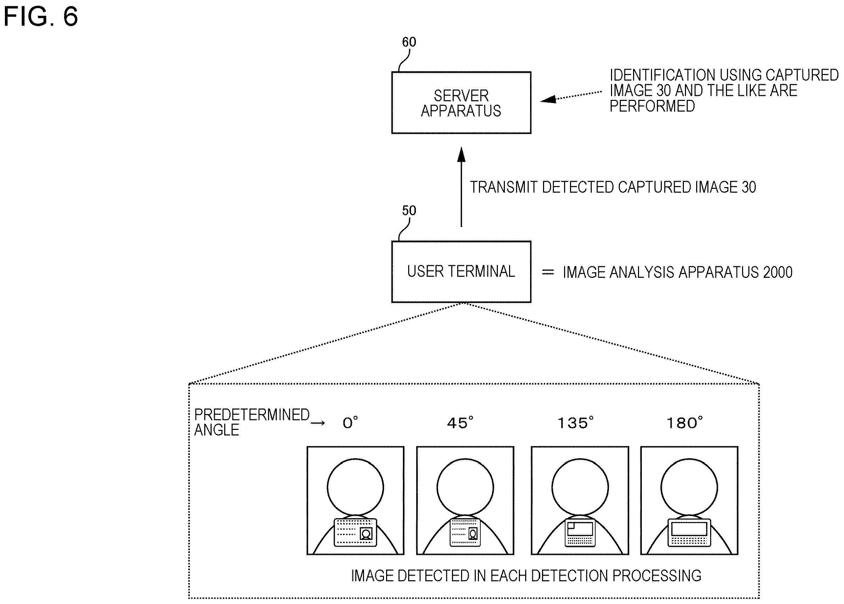

Fig. 6 is a diagram illustrating the usage environment of the image analysis apparatus 2000. In this example, the image analysis apparatus 2000 is achieved in a user terminal 50. The user terminal 50 is, for example, a smartphone provided with the camera 40.

The user 10 provides an image of the identification card 20 to a server apparatus 60 by using the user terminal 50. For example, an application for causing the user terminal 50 to function as the image analysis apparatus 2000 is installed in the user terminal 50. The user 10 activates and operates this application. As a result, a message that prompts capturing of the identification card 20 to be performed is displayed on a display apparatus of the user terminal 50, and the camera 40 is also activated. The user 10 performs capturing of the identification card 20 by using the camera 40. For example, the user 10 causes the camera 40 to capture the identification card 20 while rotating the identification card 20.

The user terminal 50 analyzes, in order, a time-series of the captured images 30 generated by the camera 40 through the operation described above. For example, the user terminal 50 performs the first detection processing on, as a target, each of the captured images 30 in order from a first captured image 30 in time series. When the captured image 30 that satisfies the first predetermined condition is detected in the first detection processing, the user terminal 50 performs the second detection processing on, as a target, each of the captured images 30 being generated after the detected captured image 30. Furthermore, when the captured image 30 that satisfies the second predetermined condition is detected in the second detection processing, the user terminal 50 performs a third detection processing on, as a target, each of the captured images 30 being generated after the detected captured image 30. Hereinafter, the user terminal 50 similarly performs the processing in order up to the n-th detection processing.

For example, in the example in Fig. 6, the first detection processing to a fourth detection processing are performed. A first predetermined angle to a fourth predetermined angle are each 0°, 45°, 135°, and 180°. In other words, four captured images 30 being the captured image 30 in which the main surface of the identification card 20 is captured from the front, the captured image 30 in which the main surface of the identification card 20 is captured obliquely from 45°, the captured image 30 in which the back surface of the identification card 20 is captured obliquely from 45°, and the captured image 30 in which the back surface of the identification card 20 is captured from the front are detected by the detection unit 2020.

The user terminal 50 provides, to the server apparatus 60, at least one or more of the captured images 30 detected in each detection processing. For example, all of the four captured images 30 described above are transmitted to the server apparatus 60. These captured images 30 are used for personal identification of the user 10. Note that, any method can be used as a specific method of performing personal identification of a user by using an image in which the identification card 20 is captured.

Herein, by performing each detection processing described above, the captured image 30 including the identification card 20 captured at a predetermined angle is transmitted from the user terminal 50 to the server apparatus 60. Thus, when the identification card 20 captured at the predetermined angle is needed for personal identification, a situation where "the server apparatus 60 requires the user terminal 50 to provide the captured image 30 again for a reason that the identification card 20 is not captured at the predetermined angle" can be prevented from occurring. In this way, personal identification of the user 10 can be performed more smoothly.

Note that, as described above, a usage environment of the image analysis apparatus 2000 is not limited to the example described herein. For example, the image analysis apparatus 2000 is not limited to a portable terminal such as a smartphone. For example, a desktop PC may be used as the image analysis apparatus 2000, and a camera connected to the desktop PC may be used as the camera 40.

### <Acquisition of Captured Image 30>

The detection unit 2020 acquires the captured image 30, and performs each detection processing. Various methods of acquiring the captured image 30 by the detection unit 2020 can be used. For example, the detection unit 2020 receives the captured image 30 transmitted from the camera 40. In addition, for example, the detection unit 2020 accesses the camera 40, and acquires the captured image 30 stored in the camera 40.

Note that, the camera 40 may store the captured image 30 in a storage apparatus (for example, the storage device 1080) provided outside the camera 40. In this case, the detection unit 2020 acquires the captured image 30 by accessing the storage apparatus.

A timing at which the detection unit 2020 acquires the captured image 30 is optional. For example, each time the captured image 30 is generated by the camera 40, the detection unit 2020 acquires the newly generated captured image 30. In addition, for example, the detection unit 2020 may regularly acquire the captured image 30 that has not yet been acquired. For example, when the detection unit 2020 acquires the captured image 30 once in a second, the detection unit 2020 collectively acquires one or more of the captured images 30 being generated in one second (for example, 30 captured images 30 when the camera 40 is a video camera having a frame rate of 30 frames/second (fps)).

<Performing of Detection Processing: S104>

The detection unit 2020 performs the first detection processing to the n-th detection processing (S104). There are various types of specific methods of achieving the detection processing. For example, the detection unit 2020 is provided in advance with a discriminator (hereinafter, an i-th discriminator) that has performed learning in such a way as to discriminate whether the captured image 30 satisfies the i-th predetermined condition. The i-th discriminator outputs a discrimination result of whether the captured image 30 satisfies the i-th predetermined condition in response to an input of the captured image 30. For example, a first discriminator outputs a discrimination result of whether the captured image 30 satisfies the first predetermined condition in response to an input of the captured image 30. Similarly, a second discriminator outputs a discrimination result of whether the captured image 30 satisfies the second predetermined condition in response to an input of the captured image 30. For example, the discrimination result is a flag indicating 1 when the captured image 30 satisfies the i-th predetermined condition and indicating 0 when the captured image 30 does not satisfy the i-th predetermined condition. Herein, various models such as a neural network and a support vector machine (SVM) can be used as a model of the discriminator.

The discriminator is provided for each kind of an identification card, for example. For example, when a driver's license and a passport can be used as an identification card, both of a discriminator that targets the captured image 30 including a driver's license and a discriminator that targets the captured image 30 including a passport are provided in advance. Note that, when any of a plurality of kinds of an identification card can be used for personal identification, which kind of identification card is included in the captured image 30 provided from the user 10 (i.e., which kind of identification card is provided for personal identification by a user) needs to be specified in advance by the user.

The discriminator has performed learning in advance in such a way as to be able to achieve the processing described above. Specifically, learning of the i-th discriminator is performed by using, as learning data, positive example data that an "image that satisfies the i-th predetermined condition, a discrimination result = 1" and negative example data that an "image that does not satisfy the i-th predetermined condition, a discrimination result = 0". Herein, an existing technique can be used as a technique for performing learning of the discriminator by using the positive example data and the negative example data.

For example, it is assumed that the i-th predetermined condition is that the "identification card 20 captured at the i-th predetermined angle is included". In this case, an image included in the positive example data is an image including the identification card 20 captured at the i-th predetermined angle. Further, an image included in the negative example data is an image that does not include the identification card 20 captured at the i-th predetermined angle.

Herein, the discriminator is not used for only an identification card of a specific individual as a target, and is used for an identification card of various users as a target. Thus, an identification card included in an image used for learning does not need to completely coincide with the identification card 20 to be detected, and may have, to some extent, a feature of an identification card of the same kind as that of the identification card 20 to be detected. For example, when a driver's license is handled as the identification card 20, the positive example data used for learning of the i-th discriminator may include an image to a degree that a feature of the driver's license viewed from the i-th predetermined angle is clear.

In this way, an image used for learning may not be necessarily an image in which a formal identification card (for example, an original of an identification card issued by government and municipal offices) is captured. For example, an image used for learning can be generated by capturing a sample and the like of the identification card 20. In addition, for example, an image used for learning may be artificially generated by using a technique such as generative adversarial networks (GAN).

Further, in a condition that the "identification card 20 captured at the i-th predetermined angle is included", a slight difference in angle of the identification card 20 may be permitted. For example, when a predetermined condition that the "identification card 20 captured obliquely at 45° is included" is used, the captured image 30 in which the identification card 20 is captured obliquely at 44° or 46° may also be handled as an image that satisfies the predetermined condition. For example, such an i-th discriminator that can permit a slight error can be constructed by using, as an image of the positive example data used for learning, not only an image in which the identification card 20 is captured at the i-th predetermined angle but also an image in which the identification card 20 is captured at an angle deviated from the i-th predetermined angle within a range of permitted errors.

Note that, a method of achieving each detection processing is not limited to a method of using the discriminator. For example, it is assumed that the i-th predetermined condition is that the "identification card 20 captured at the i-th predetermined angle is included". In this case, an image feature (hereinafter, an i-th image feature) of an image region representing the identification card 20 captured at the i-th predetermined angle is prepared for each i-th predetermined angle, and is stored in advance in a storage apparatus that can be accessed from the detection unit 2020. The detection unit 2020 uses the image feature stored in the storage apparatus.

For example, the detection unit 2020 determines whether an image feature having a high degree of similarity with the i-th image feature (having a degree of similarity equal to or more than a predetermined threshold value) is included in the captured image 30. When the image feature having a high degree of similarity with the i-th image feature is included in the captured image 30, the detection unit 2020 determines that the identification card 20 captured at the i-th predetermined angle is included in the captured image 30. On the other hand, when the image feature having a high degree of similarity with the i-th image feature is not included in the captured image 30, the detection unit 2020 determines that the identification card 20 captured at the i-th predetermined angle is not included in the captured image 30.

Herein, similarly to learning of the discriminator described above, an image used for generation of the i-th image feature does not necessarily need to be an image in which a formal identification card is captured. For example, an image feature extracted from an image generated by capturing a replica of the identification card 20 or an image feature extracted from an image artificially generated by using a technique such as GAN may be used.

### <Timing at which Each Detection Processing is Performed>

The first detection processing to the n-th detection processing may be simultaneously performed, may be performed in any order, or may be performed in a predetermined order. When the first detection processing to the n-th detection processing are performed in a predetermined order, for example, the detection unit 2020 performs each one of the first detection processing to the n-th detection processing in this order as illustrated in the flowchart in Fig. 5. In other words, when the captured image 30 that satisfies the i-th predetermined condition is detected in the i-th detection processing, the detection unit 2020 performs (i+1)-th detection processing. In other words, detection of the captured image 30 that satisfies an (i+1)-th predetermined condition is not performed until the captured image 30 that satisfies the i-th predetermined condition is detected.

### <Other Condition Included in i-th Predetermined Condition>

The i-th predetermined condition may include another condition in addition to the condition that an "image region representing the identification card 20 captured at the i-th predetermined angle is included". For example, it is assumed that the identification card 20 includes a face photograph of a person himself/herself. In this case, by performing capturing in such a way as to include, in the captured image 30, not only the identification card 20 but also a face of a provider of the identification card 20 (see the captured image 30 in Fig. 1), whether the provider of the identification card 20 is a rightful owner of the identification card 20 (a person having his/her identity proved by the identification card 20) can be determined by determining a degree of coincidence between an image of the face of the provider of the identification card 20 included in the captured image 30 and the face image of the identification card 20 included in the captured image 30.

Thus, for example, a condition that a "degree of coincidence between an image of a face of a provider of the identification card 20 included in the captured image 30 and a face image of the identification card 20 included in the captured image 30 satisfies a reference (degree of coincidence is equal to or more than a threshold value)" may be included in the predetermined condition. In this case, for example, the detection unit 2020 extracts, from the captured image 30, a face of a provider of the identification card 20 and a face image of the identification card 20, and computes a degree of coincidence between the face of the provider and the face image. Note that, an existing technique can be used as a technique for computing a degree of coincidence between face images.

Note that, depending on an angle of the captured identification card 20, a face image of the identification card 20 may not be included in the captured image 30, or a feature of a face cannot be accurately extracted from a face image included in the captured image 30. Thus, a condition related to a degree of coincidence between a face of a provider of the identification card 20 and a face image of the identification card 20 is suitably included only in a predetermined condition that the i-th predetermined angle is an angle at which the identification card 20 is captured in a state where a feature of a face can be sufficiently extracted from a face image included in the identification card 20. For example, when a face image is included in the main surface of the identification card 20 and a first predetermined angle is 0° (an angle at which the main surface of the identification card 20 is captured from the front), a condition that a "degree of coincidence between an image of a face of a provider of the identification card 20 included in the captured image 30 and a face image of the identification card 20 included in the captured image 30 satisfies a reference" may be included only in a first predetermined condition.

For example, a condition related to a background (hereinafter, a background of the captured image 30) of the identification card 20 in the captured image 30 is included in the i-th predetermined condition. Specifically, a condition that a degree of coincidence between a background of the captured image 30 to be determined and a background of the captured image 30 detected in (i-1)-th detection processing or previous detection processing satisfies a reference (for example, the degree of coincidence is equal to or more than a reference value) can be included in the i-th predetermined condition. By using such a predetermined condition, the captured images 30 detected in each of the detection processing have a higher degree of coincidence between backgrounds. Thus, fraud such as falsification added to a series of the captured images 30 can be prevented. Note that, when the first detection processing to the n-th detection processing are performed in this order, a condition of a background may not be included in the first predetermined condition.

For example, a condition that a "degree of coincidence between a background of the captured image 30 detected in the i-th detection processing and a background of the captured image 30 detected in the (i-1)-th detection processing satisfies a reference" is used as the i-th predetermined condition. In other words, a degree of coincidence between backgrounds is set in such a way as to satisfy the reference in the captured image 30 detected in each of two continuous detection processing.

In addition, for example, a condition that a "degree of coincidence between a background of the captured image 30 detected in the i-th detection processing and a background of the captured image 30 detected in the first detection processing satisfies a reference" is used as the i-th predetermined condition. In other words, a degree of coincidence between a background of each of the captured images 30 detected in the second detection processing to the n-th detection processing and a background of the captured image 30 detected first (detected in the first detection processing) is set in such a way as to satisfy the reference.

Note that, whether a degree of coincidence between backgrounds in two captured images 30 different from each other satisfies the reference can be determined by various methods. Herein, in order to make description clear, two compared captured images 30 are referred to as captured images A and B. For example, the detection unit 2020 computes an image feature of a background for each of the captured images A and B. Herein, a background of the captured image 30 is a portion (the captured image 30 in which an image region representing the identification card 20 is masked) acquired by excluding an image region representing the identification card 20 from the captured image 30. Then, the detection unit 2020 determines whether a degree of coincidence between the image features of the backgrounds is equal to or more than a reference value. When the degree of coincidence between the image features of the backgrounds is equal to or more than the reference value, the detection unit 2020 determines that the degree of coincidence between the backgrounds of the captured images A and B satisfies the reference. On the other hand, when the degree of coincidence between the image features of the backgrounds is not equal to or more than the reference value, the detection unit 2020 determines that the degree of coincidence between the backgrounds of the captured images A and B does not satisfy the reference.

The detection unit 2020 may divide a comparison between backgrounds into two that are 1) a comparison between faces of the user 10 and 2) a comparison between backgrounds other than the faces. For example, the comparison is performed as follows. First, the detection unit 2020 computes an image feature of an image region representing a face for each of the captured images A and B. Then, the detection unit 2020 computes a degree of coincidence between the image feature of the face in the captured image A and the image feature of the face in the captured image B.

Furthermore, the detection unit 2020 computes an image feature of a background other than the face (the captured image 30 acquired by excluding an image region of the identification card 20 and the image region of the face) for each of the captured images A and B. Then, the detection unit 2020 computes a degree of coincidence between the image feature of the background other than the face in the captured image A and the image feature of the background other than the face in the captured image B.

When both of the degree of coincidence between the image features of the faces and the degree of coincidence between the image features of the backgrounds other than the faces are equal to or more than a threshold value, the detection unit 2020 determines that the degree of coincidence between the backgrounds of the captured images A and B satisfies the reference. On the other hand, when at least one of the degree of coincidence between the image features of the faces and the degree of coincidence between the image features of the backgrounds other than the faces is not equal to or more than the threshold value, the detection unit 2020 determines that the degree of coincidence between the backgrounds of the captured images A and B does not satisfy the reference.

### <Output of Detected Captured Image 30>

The image output unit 2040 outputs information including one or more of the n captured images 30 detected in the first detection processing to the n-th detection processing.
Hereinafter, the information is referred to as output information. For example, the output information is information in which identification information about the user 10 and one or more of the captured images 30 are associated with each other. By associating the captured image 30 included in the output information with the identification information about the user 10, whose identity is confirmed by using the captured image 30 can be determined. In other words, the captured image 30 included in the output information is used for personal identification of the user 10 determined by the identification information included in the output information.

However, when the captured image 30 and the identification information about the user 10 can be associated with each other in an apparatus (such as the server apparatus 60 in Fig. 6) that receives the output information, the identification information about the user 10 may not be included in the output information. For example, a predetermined connection is established between the server apparatus 60 and the image analysis apparatus 2000, and the identification information about the user 10 and the output information are transmitted from the image analysis apparatus 2000 to the server apparatus 60 via the connection. With this method, even when the identification information about the user 10 and the output information are transmitted at timings different from each other, the server apparatus 60 can associate the identification information about the user 10 with the output information (i.e., the captured image 30 included in the output information). Note that, in order to for simplify description below, it is assumed that the identification information about the user 10 is included in the output information unless otherwise specified.

The output information may include all of the captured images 30 detected by the detection unit 2020, or may include only a part of the captured images 30. In the latter case, for example, the output information includes only the captured image 30 detected in a predetermined number of detection processing less than n.

Herein, it is conceivable that the captured image 30 in which the main surface of the identification card 20 is captured is highly useful in personal identification of the user 10. Thus, it is preferable that at least the captured image 30 in which the main surface of the identification card 20 is captured is included in the output information. Further, information described on the back surface of the identification card 20 may also be important. In this case, it is conceivable that the captured image 30 in which the back surface of the identification card 20 is captured is also highly useful in personal identification of the user 10. Thus, in this case, it is preferable that the captured image 30 in which the back surface of the identification card 20 is captured is also included in the output information.

Note that, which detection processing each of the main surface and the back surface of the identification card 20 is detected can be recognized in advance. For example, it is assumed that the first predetermined angle is 0° (a state where the main surface of the identification card 20 faces the camera 40), and the n-th predetermined angle is 180° (a state where the back surface of the identification card 20 faces the camera 40). In this case, the captured image 30 including the main surface of the identification card 20 is the captured image 30 detected in the first detection processing, and the captured image 30 including the back surface of the identification card 20 is the captured image 30 detected in the n-th detection processing. Then, the image output unit 2040 includes, in the output information, at least the captured image 30 detected in the first detection processing and the captured image 30 detected in the n-th detection processing.

Note that, not only the captured image 30 detected by the detection unit 2020 but also the other captured image 30 may be included in the output information. For example, the image output unit 2040 may include, in the output information, all of the captured images 30 generated by the camera 40. In addition, for example, the image output unit 2040 may include, in the output information, all of a time-series of the captured images 30 from the captured image 30 detected in the first detection processing to the captured image 30 detected in the n-th detection processing. For example, in this case, when it is assumed that the first predetermined angle = 0° and the n-th predetermined angle = 180°, the output information includes a time-series of the captured images 30 (video) in which a series of flows from the state where the main surface of the identification card 20 faces the camera 40 until the back surface of the identification card 20 faces the camera 40 is captured.

The processing of confirming identity of the user 10 by using the captured image 30 may be manually performed, or may be automatically performed by an apparatus. Note that, any method can be used as a method of performing personal identification of a user by using an image including an identification card of the user.

### [Example Embodiment 2]

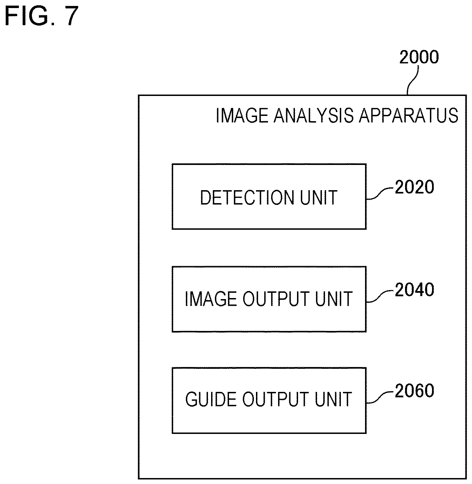

Fig. 7 is a block diagram illustrating a functional configuration of an image analysis apparatus 2000 according to an example embodiment 2. The image analysis apparatus 2000 according to the example embodiment 2 has a function similar to that of the image analysis apparatus 2000 according to the example embodiment 1 except for a point described below.

In the image analysis apparatus 2000 according to the example embodiment 2, as a premise, each one of first detection processing to n-th detection processing is performed in this order. In other words, when a captured image 30 is detected in i-th detection processing, a detection unit 2020 performs (i+1)-th detection processing.

The image analysis apparatus 2000 according to the example embodiment 2 includes a guide output unit 2060. The guide output unit 2060 outputs a guide to a user 10 in such a way as to increase a probability that the captured image 30 that satisfies each predetermined condition is acquired. Hereinafter, the guide to be output in such a way as to increase a probability that the captured image 30 that satisfies an i-th predetermined condition is acquired is referred to as an i-th guide.

The image analysis apparatus 2000 performs the i-th detection processing after outputting the i-th guide. Further, when the captured image 30 that satisfies the i-th predetermined condition is detected in the i-th detection processing, the image analysis apparatus 2000 outputs an (i+1)-th guide. Subsequently, the image analysis apparatus 2000 outputs the (i+1)-th guide.

### <Representative Advantageous Effect>

The image analysis apparatus 2000 according to the present example embodiment increases a probability that an identification card 20 is captured in such a way as to satisfy a predetermined condition. Thus, the image analysis apparatus 2000 can increase a probability that the captured image 30 that satisfies the predetermined condition can be detected in each detection processing.

Further, the user 10 can provide a correct image of the identification card 20 by performing capturing of the identification card 20 according to a guide output from the image analysis apparatus 2000. Thus, usability of the image analysis apparatus 2000 improves for the user 10.

Hereinafter, the image analysis apparatus 2000 according to the present example embodiment will be described in more detail.

### <Flow of Processing>

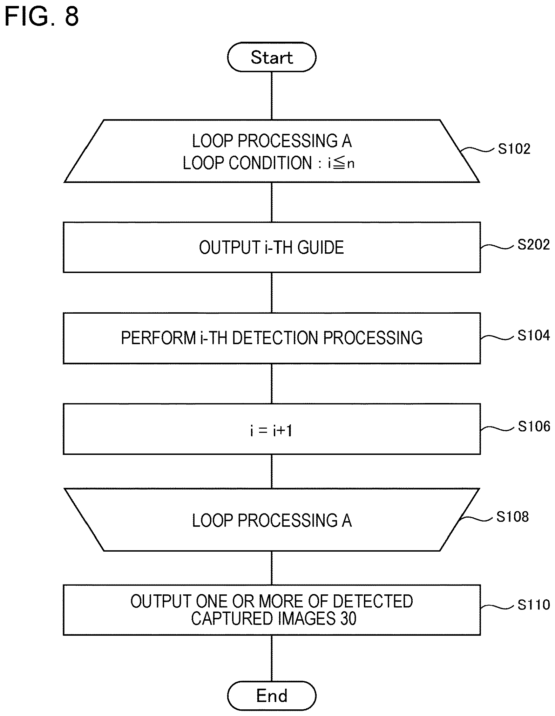

Fig. 8 is a flowchart illustrating a flow of processing performed by the image analysis apparatus 2000 according to the example embodiment 2. The flowchart in Fig. 8 is the same as the flowchart in Fig. 5 except for a point that an output of the i-th guide (S202) is added before the i-th detection processing (S104).

### <With Regard to Guide>

The guide output unit 2060 outputs a guide that increases a probability that the captured image 30 that satisfies the predetermined condition is captured. For example, when the i-th predetermined condition is a condition that the "identification card 20 captured at an i-th predetermined angle is included", the i-th guide is a guide that prompts capturing of the identification card 20 at the i-th predetermined angle.

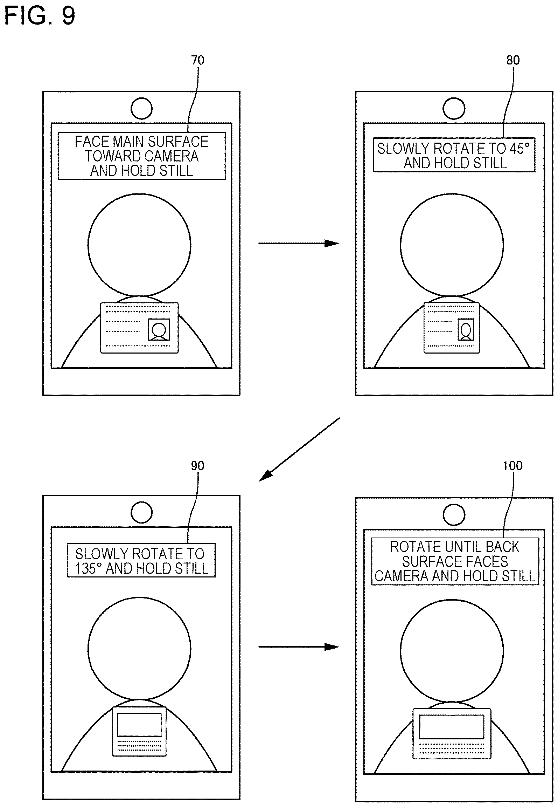

Fig. 9 is a diagram illustrating a guide output from the guide output unit 2060. In this example, the image analysis apparatus 2000 performs the first detection processing to a fourth detection processing. In other words, n = 4. Then, a first predetermined angle to a fourth predetermined angle are each 0°, 45°, 135°, and 180°.

In this case, first, the guide output unit 2060 outputs a first guide 70 having a content that "face main surface toward camera and hold still" and the like to a display apparatus (for example, a display apparatus provided on a user terminal 50 in Fig. 6) that can be viewed by the user 10. By viewing the first guide 70, the user 10 can recognize that the main surface of the identification card 20 should face a camera 40.

When the captured image 30 that satisfies a first predetermined condition is detected, the guide output unit 2060 outputs a second guide 80 having a content that "slowly rotate to 45° and hold still" and the like. When the captured image 30 that satisfies a second predetermined condition is detected, the guide output unit 2060 outputs a third guide 90 having a content that "slowly rotate to 135° and hold still" and the like. When the captured image 30 that satisfies a third predetermined condition is detected, the guide output unit 2060 outputs a fourth guide 100 having a content that "slowly rotate until back surface faces camera and hold still" and the like.

Note that, an output method of a guide is not limited to a method of outputting a message to a display apparatus. For example, the guide output unit 2060 may output the guide described above by sound.

In addition to the guide described above, a message for causing the user 10 to recognize that the captured image 30 that satisfies the predetermined condition is detected may be further displayed. For example, in the example in Fig. 9, when the captured image 30 that satisfies the first predetermined condition is detected after the first guide 70 is output, a message, such as "OK" and "capturing successful", indicating that the captured image 30 that satisfies the first predetermined condition is detected is output. This message may be output simultaneously with the second guide 80, or may be output before the second guide 80 is output. The same also applies when the captured image 30 that satisfies the other predetermined condition is detected. By outputting a message representing that the captured image 30 that satisfies the predetermined condition is detected in such a manner, usability of the image analysis apparatus 2000 further improves for the user 10.

Further, as described above, a condition related to coincidence between backgrounds may be included in the predetermined condition. Thus, for example, a message, such as "do not change background", "do not change capturing place", and "do not move", that prompts capturing to be performed in a situation where a background does not change may be further included in the guide.

While the example embodiments of the present invention have been described with reference to the drawings, the example embodiments are only exemplification of the present invention, and combination of each of the above-described example embodiments or various configurations other than the above-described example embodiments can also be employed as long as they fall into the scope of the appended claims.

This application is based upon and claims the benefit of priority from Japanese patent application No. 2019-166160, filed on September 12, 2019.

### [Reference signs List]

- 10: User
- 20: Identification card
- 30: Captured image
- 40: Camera
- 50: User terminal
- 60: Server apparatus
- 70: First guide
- 80: Second guide
- 90: Third guide
- 100: Fourth guide
- 1000: Computer
- 1020: Bus
- 1040: Processor
- 1060: Memory
- 1080: Storage device
- 1100: Input/output interface
- 1120: Network interface
- 2000: Image analysis apparatus
- 2020: Detection unit
- 2040: Image output unit
- 2060: Guide output unit

## Claims

1. A program causing a computer to execute:
first detection processing of detecting (S104), from one or more captured images generated by a camera for personal identification of a user, a first captured image that satisfies a first predetermined condition;
second detection processing of detecting (S104), from the one or more captured images generated by the camera, a second captured image that satisfies a second predetermined condition; and
image output processing of outputting (S110), upon detecting the first captured image and the second captured image, at least either one of the first and second captured images,
**characterized in that**:
the first predetermined condition includes a condition that a first image region included in the first captured image represents one surface of a target identification card captured at a first predetermined angle and has a first degree of similarity with a first image feature equal to or more than a predetermined threshold value, the first image feature being of the target identification card or of an identification card of the same kind as the target identification card, and being stored in advance,
the second predetermined condition includes a condition that a second image region included in the second captured image represents the one surface of the target identification card captured at a second predetermined angle and has a second degree of similarity with a second image feature equal to or more than the predetermined threshold value, the second image feature being of the target identification card or of said identification card of the same kind as the target identification card, and being stored in advance, and
the at least one of the first and second captured images outputted in image output processing is used for personal identification of the user.

2. The program according to claim 1, wherein
the second detection processing is executed after the captured image that satisfies the first predetermined condition is detected.

3. The program according to claim 2, further causing the computer to execute
guide output processing of outputting a guide that prompts a change of an angle of the target identification card to the second predetermined angle after the captured image that satisfies the first predetermined condition is detected, wherein
the second detection processing is executed after the guide output processing.

4. The program according to any one of claims 1 to 3, wherein
the captured image includes the target identification card and a background of the target identification card, and
the second predetermined condition further includes a condition that a degree of coincidence between the background of the target identification card in the captured image being a processing target in the second detection processing and the background of the target identification card in the captured image detected in the first detection processing is equal or more than a reference value.

5. The program according to any one of claims 1 to 4, wherein
the captured image being a processing target in the first detection processing and the captured image being a processing target in the second detection processing are included in a video generated by the camera.

6. An image analysis apparatus (2000), comprising:
a detection unit (2020) that executes first detection processing of detecting, from one or more captured images generated by a camera for personal identification of a user, a first captured image that satisfies a first predetermined condition, and second detection processing of detecting, from the one or more captured images generated by the camera, a second captured image that satisfies a second predetermined condition; and
an image output unit (2400) that outputs, upon detecting the first captured image and the second captured image, at least either one of the first and second captured images,
**characterized in that**:
the first predetermined condition includes a condition that a first image region included in the first captured image represents one surface of a target identification card captured at a first predetermined angle and has a first degree of similarity with a first image feature equal to or more than a predetermined threshold value, the first image feature being of the target identification card or of an identification card of the same kind as the target identification card, and being stored in advance,
the second predetermined condition includes a condition that a second image region included in the second captured image represents the one surface of the target identification card captured at a second predetermined angle and has a second degree of similarity with a second image feature equal to or more than the predetermined threshold value, the second image feature being of the target identification card or of said identification card of the same kind as the target identification card, and being stored in advance, and
the at least one of the first and second captured images outputted in image output processing is used for personal identification of the user.

7. The image analysis apparatus according to claim 6, wherein
the second detection processing is executed after the captured image that satisfies the first predetermined condition is detected.

8. The image analysis apparatus according to claim 7, further comprising
a guide output unit that outputs a guide that prompts a change of an angle of the target identification card to the second predetermined angle after the captured image that satisfies the first predetermined condition is detected, wherein
the detection unit executes the second detection processing after the guide is output.

9. The image analysis apparatus according to any one of claims 6 to 8, wherein
the captured image includes the target identification card and a background of the target identification card, and
the second predetermined condition further includes a condition that a degree of coincidence between the background of the target identification card in the captured image being a processing target in the second detection processing and the background of the target identification card in the captured image detected in the first detection processing is equal or more than a reference value.

10. The image analysis apparatus according to any one of claims 6 to 9, wherein
the captured image being a processing target in the first detection processing and the captured image being a processing target in the second detection processing are included in a video generated by the camera.

11. A control method being executed by a computer, comprising:
a first detection step of detecting (S104), from one or more captured images generated by a camera for personal identification of a user, a first captured image that satisfies a first predetermined condition;
a second detection step of detecting (S104), from the one or more captured images generated by the camera, a second captured image that satisfies a second predetermined condition; and
an image output step of outputting (S110), upon detecting the first captured image and the second captured image, at least either one of the first and second captured images,
**characterized in that**:
the first predetermined condition includes a condition that a first image region included in the first captured image represents one surface of a target identification card captured at a first predetermined angle and has a first degree of similarity with a first image feature equal to or more than a predetermined threshold value, the first image feature being of the target identification card or of an identification card of the same kind as the target identification card, and being stored in advance,
the second predetermined condition includes a condition that a second image region included in the second captured image represents the one surface of the target identification card captured at a second predetermined angle and has a second degree of similarity with a second image feature equal to or more than the predetermined threshold value, the second image feature being of the target identification card or of said identification card of the same kind as the target identification card, and being stored in advance, and
the at least one of the first and second captured images outputted in image output processing is used for personal identification of the user.

12. The control method according to claim 11, wherein
the second detection step is executed after the captured image that satisfies the first predetermined condition is detected.

13. The control method according to claim 12, further comprising
a guide output step of outputting a guide that prompts a change of an angle of the target identification card to the second predetermined angle after the captured image that satisfies the first predetermined condition is detected, wherein
the second detection step is executed after the guide output step.

14. The control method according to any one of claims 11 to 13, wherein
the captured image includes the target identification card and a background of the target identification card, and
the second predetermined condition further includes a condition that a degree of coincidence between the background of the target identification card in the captured image being a processing target in the second detection step and the background of the target identification card in the captured image detected in the first detection step is equal or more than a reference value.

15. The control method according to any one of claims 11 to 14, wherein
the captured image being a processing target in the first detection step and the captured image being a processing target in the second detection step are included in a video generated by the camera.

## Patentansprüche

1. Programm, das veranlasst, dass ein Computer folgendes ausführt:
eine erste Erkennungsverarbeitung zum Erkennen (S104), aus einem oder mehreren aufgenommenen, durch eine Kamera zur persönlichen Identifizierung eines Anwenders erzeugten, Bildern, eines ersten aufgenommenen Bildes, das eine erste vorbestimmte Bedingung erfüllt;
eine zweite Erkennungsverarbeitung zum Erkennen (S104), aus dem einen oder den mehreren aufgenommenen, durch die Kamera erzeugten, Bildern, eines zweiten aufgenommenen Bildes, das eine zweite vorbestimmte Bedingung erfüllt; und
eine Bildausgabeverarbeitung zum Ausgeben (S110), auf ein Erkennen des ersten aufgenommenen Bildes und des zweiten aufgenommenen Bildes hin, wenigstens eines des ersten und des zweiten aufgenommenen Bildes,
**dadurch gekennzeichnet, dass**
die erste vorbestimmte Bedingung eine Bedingung enthält, dass ein im ersten aufgenommenen Bild enthaltener erster Bildbereich eine Oberfläche eines unter einem ersten vorbestimmten Winkel aufgenommenen Ziel-Personalausweises darstellt und einen ersten Ähnlichkeitsgrad mit einem ersten Bildmerkmal gleich einem vorbestimmten Schwellenwert oder größer als dieser hat, wobei das erste Bildmerkmal vom Ziel-Personalausweis oder von einem Personalausweis von derselben Art wie der Ziel-Personalausweis ist und im Voraus gespeichert ist,
die zweite vorbestimmte Bedingung eine Bedingung enthält, dass ein im zweiten aufgenommen Bild enthaltener zweiter Bildbereich die eine Oberfläche des unter einem zweiten vorbestimmten Winkel aufgenommenen Ziel-Personalausweises darstellt und einen zweiten Ähnlichkeitsgrad mit einem zweiten Bildmerkmal gleich dem vorbestimmten Schwellenwert oder größer als dieser hat, wobei das zweite Bildmerkmal vom Ziel-Personalausweis oder von dem Personalausweis von derselben Art wie der Ziel-Personalausweis ist und im Voraus gespeichert ist, und
das wenigstens eine des ersten und des zweiten aufgenommenen Bildes, ausgegeben bei einer Bildausgabeverarbeitung, zur persönlichen Identifizierung des Anwenders verwendet wird.

2. Programm nach Anspruch 1, wobei
die zweite Erkennungsverarbeitung ausgeführt wird, nachdem das aufgenommene Bild, das die erste vorbestimmte Bedingung erfüllt, erkannt ist.

3. Programm nach Anspruch 2, das weiterhin veranlasst, dass der Computer folgendes ausführt:
eine Anleitungsausgabeverarbeitung zum Ausgeben einer Anleitung, die zu einer Änderung eines Winkels des Ziel-Personalausweises zum zweiten vorbestimmten Winkel auffordert, nachdem das aufgenommene Bild, das die erste vorbestimmte Bedingung erfüllt, erkannt ist, wobei
die zweite Erkennungsverarbeitung nach der Anleitungsausgabeverarbeitung ausgeführt wird.

4. Programm nach einem der Ansprüche 1 bis 3, wobei
das aufgenommene Bild den Ziel-Personalausweis und einen Hintergrund des Ziel-Personalausweises enthält, und
die zweite vorbestimmte Bedingung weiterhin eine Bedingung enthält, dass eine Übereinstimmungsgrad zwischen dem Hintergrund des Ziel-Personalausweises im aufgenommenen Bild, das ein Verarbeitungsziel bei der zweiten Erkennungsverarbeitung ist, und dem Hintergrund des Ziel-Personalausweises im aufgenommenen Bild, das bei der erste Erkennungsverarbeitung erkannt ist, gleich einem oder größer als ein Referenzwert ist.

5. Programm nach einem der Ansprüche 1 bis 4, wobei
das aufgenommene Bild, das ein Verarbeitungsziel bei der ersten Erkennungsverarbeitung ist, und das aufgenommene Bild, das ein Verarbeitungsziel bei der zweiten Erkennungsverarbeitung ist, in einem durch die Kamera erzeugten Video enthalten sind.

6. Bildanalysevorrichtung (2000), umfassend:
eine Erkennungseinheit (2020), die eine erste Erkennungsverarbeitung zum Erkennen, aus einem oder mehreren aufgenommenen, durch eine Kamera zur persönlichen Identifizierung eines Anwenders erzeugten, Bildern, eines ersten aufgenommenen Bildes, das eine erste vorbestimmte Bedingung erfüllt, und eine zweite Erkennungsverarbeitung zum Erkennen, aus dem einen oder den mehreren aufgenommenen, durch die Kamera erzeugten, Bildern, eines zweiten aufgenommenen Bildes, das eine zweite vorbestimmte Bedingung erfüllt, ausführt; und
eine Bildausgabeeinheit (2400), die auf ein Erkennen des ersten aufgenommenen Bildes und des zweiten aufgenommenen Bildes hin, wenigstens eines des ersten und des zweiten aufgenommenen Bildes ausgibt,
**dadurch gekennzeichnet, dass**:
die erste vorbestimmte Bedingung eine Bedingung enthält, dass ein im ersten aufgenommenen Bild enthaltener erster Bildbereich eine Oberfläche eines unter einem ersten vorbestimmten Winkel aufgenommenen Ziel-Personalausweises darstellt und einen ersten Ähnlichkeitsgrad mit einem ersten Bildmerkmal gleich einem vorbestimmten Schwellenwert oder größer als dieser hat, wobei das erste Bildmerkmal vom Ziel-Personalausweis oder von einem Personalausweis von derselben Art wie der Ziel-Personalausweis ist und im Voraus gespeichert ist,
die zweite vorbestimmte Bedingung eine Bedingung enthält, dass ein im zweiten aufgenommen Bild enthaltener zweiter Bildbereich die eine Oberfläche des unter einem zweiten vorbestimmten Winkel aufgenommenen Ziel-Personalausweises darstellt und einen zweiten Ähnlichkeitsgrad mit einem zweiten Bildmerkmal gleich dem vorbestimmten Schwellenwert oder größer als dieser hat, wobei das zweite Bildmerkmal vom Ziel-Personalausweis oder von dem Personalausweis von derselben Art wie der Ziel-Personalausweis ist und im Voraus gespeichert ist, und
das wenigstens eine des ersten und des zweiten aufgenommenen Bildes, ausgegeben bei einer Bildausgabeverarbeitung, zur persönlichen Identifizierung des Anwenders verwendet wird.

7. Bildanalysevorrichtung nach Anspruch 6, wobei
die zweite Erkennungsverarbeitung ausgeführt wird, nachdem das aufgenommene Bild, das die erste vorbestimmte Bedingung erfüllt, erkannt ist.

8. Bildanalysevorrichtung nach Anspruch 7, weiterhin umfassend:
eine Anleitungsausgabeeinheit, die eine Anleitung ausgibt, die zu einer Änderung eines Winkels des Ziel-Personalausweises zum zweiten vorbestimmten Winkel auffordert, nachdem das aufgenommene Bild, das die erste vorbestimmte Bedingung erfüllt, erkannt ist, wobei
die Erkennungseinheit die zweite Erkennungsverarbeitung ausführt, nachdem die Anleitung ausgegeben ist.

9. Bildanalysevorrichtung nach einem der Ansprüche 6 bis 8, wobei
das aufgenommene Bild den Ziel-Personalausweis und einen Hintergrund des Ziel-Personalausweises enthält, und
die zweite vorbestimmte Bedingung weiterhin eine Bedingung enthält, dass eine Übereinstimmungsgrad zwischen dem Hintergrund des Ziel-Personalausweises im aufgenommenen Bild, das ein Verarbeitungsziel bei der zweiten Erkennungsverarbeitung ist, und dem Hintergrund des Ziel-Personalausweises im aufgenommenen Bild, das bei der erste Erkennungsverarbeitung erkannt ist, gleich einem oder größer als ein Referenzwert ist.

10. Bildanalysevorrichtung nach einem der Ansprüche 6 bis 9, wobei
das aufgenommene Bild, das ein Verarbeitungsziel bei der ersten Erkennungsverarbeitung ist, und das aufgenommene Bild, das ein Verarbeitungsziel bei der zweiten Erkennungsverarbeitung ist, in einem durch die Kamera erzeugten Video enthalten sind.

11. Steuerverfahren, das durch einen Computer ausgeführt wird, umfassend:
einen ersten Erkennungsschritt zum Erkennen (S104), aus einem oder mehreren aufgenommenen, durch eine Kamera zur persönlichen Identifizierung eines Anwenders erzeugten, Bildern, eines ersten aufgenommenen Bildes, das eine erste vorbestimmte Bedingung erfüllt;
einen zweiten Erkennungsschritt zum Erkennen (S104), aus dem einen oder den mehreren aufgenommenen, durch die Kamera erzeugten, Bildern, eines zweiten aufgenommenen Bildes, das eine zweite vorbestimmte Bedingung erfüllt; und
einen Bildausgabeschritt zum Ausgeben (S110), auf ein Erkennen des ersten aufgenommenen Bildes und des zweiten aufgenommenen Bildes hin, wenigstens eines des ersten und des zweiten aufgenommenen Bildes,
**dadurch gekennzeichnet, dass**
die erste vorbestimmte Bedingung eine Bedingung enthält, dass ein im ersten aufgenommenen Bild enthaltener erster Bildbereich eine Oberfläche eines unter einem ersten vorbestimmten Winkel aufgenommenen Ziel-Personalausweises darstellt und einen ersten Ähnlichkeitsgrad mit einem ersten Bildmerkmal gleich einem vorbestimmten Schwellenwert oder größer als dieser hat, wobei das erste Bildmerkmal vom Ziel-Personalausweis oder von einem Personalausweis von derselben Art wie der Ziel-Personalausweis ist und im Voraus gespeichert ist,
die zweite vorbestimmte Bedingung eine Bedingung enthält, dass ein im zweiten aufgenommen Bild enthaltener zweiter Bildbereich die eine Oberfläche des unter einem zweiten vorbestimmten Winkel aufgenommenen Ziel-Personalausweises darstellt und einen zweiten Ähnlichkeitsgrad mit einem zweiten Bildmerkmal gleich dem vorbestimmten Schwellenwert oder größer als dieser hat, wobei das zweite Bildmerkmal vom Ziel-Personalausweis oder von dem Personalausweis von derselben Art wie der Ziel-Personalausweis ist und im Voraus gespeichert ist, und
das wenigstens eine des ersten und des zweiten aufgenommenen Bildes, ausgegeben bei einer Bildausgabeverarbeitung, zur persönlichen Identifizierung des Anwenders verwendet wird.

12. Steuerverfahren nach Anspruch 11, wobei
der zweite Erkennungsschritt ausgeführt wird, nachdem das aufgenommene Bild, das die erste vorbestimmte Bedingung erfüllt, erkannt ist.

13. Steuerverfahren nach Anspruch 12, weiterhin umfassend:
einen Anleitungsausgabeschritt zum Ausgeben einer Anleitung, die zu einer Änderung eines Winkels des Ziel-Personalausweises zum zweiten vorbestimmten Winkel auffordert, nachdem das aufgenommene Bild, das die erste vorbestimmte Bedingung erfüllt, erkannt ist, wobei
der zweite Erkennungsschritt nach dem Anleitungsausgabeschritt ausgeführt wird.

14. Steuerverfahren nach einem der Ansprüche 11 bis 13, wobei
das aufgenommene Bild den Ziel-Personalausweis und einen Hintergrund des Ziel-Personalausweises enthält, und
die zweite vorbestimmte Bedingung weiterhin eine Bedingung enthält, dass eine Übereinstimmungsgrad zwischen dem Hintergrund des Ziel-Personalausweises im aufgenommenen Bild, das ein Verarbeitungsziel beim zweiten Erkennungsschritt ist, und dem Hintergrund des Ziel-Personalausweises im aufgenommenen Bild, das beim ersten Erkennungsschritt erkannt ist, gleich einem oder größer als ein Referenzwert ist.

15. Steuerverfahren nach einem der Ansprüche 11 bis 14, wobei
das aufgenommene Bild, das ein Verarbeitungsziel beim ersten Erkennungsschritt ist, und das aufgenommene Bild, das ein Verarbeitungsziel beim zweiten Erkennungsschritt ist, in einem durch die Kamera erzeugten Video enthalten sind.

## Revendications

1. Programme amenant un ordinateur à exécuter :
un premier traitement de détection consistant à détecter (S104), à partir d'une ou de plusieurs images capturées générées par une caméra pour l'identification personnelle d'un utilisateur, une première image capturée qui satisfait à une première condition prédéterminée ;
un deuxième traitement de détection consistant à détecter (S104), à partir des une ou plusieurs images capturées générées par la caméra, une deuxième image capturée qui satisfait à une deuxième condition prédéterminée ; et
un traitement de sortie d'image consistant à délivrer en sortie (S110), lors de la détection de la première image capturée et de la deuxième image capturée, au moins l'une ou l'autre parmi les première et deuxième images capturées,
**caractérisé en ce que** :
la première condition prédéterminée comporte une condition selon laquelle une première région d'image comprise dans la première image capturée représente une surface d'une carte d'identité cible capturée à un premier angle prédéterminé et possède un premier degré de similarité avec une première caractéristique d'image égal ou supérieur à une valeur seuil prédéterminée, la première caractéristique d'image relevant de la carte d'identité cible ou d'une carte d'identité du même type que la carte d'identité cible, et étant stockée à l'avance,
la deuxième condition prédéterminée comporte une condition selon laquelle une deuxième région d'image comprise dans la deuxième image capturée représente l'une surface de la carte d'identité cible capturée à un deuxième angle prédéterminé et possède un deuxième degré de similarité avec une deuxième caractéristique d'image égal ou supérieur à la valeur seuil prédéterminée, la deuxième caractéristique d'image relevant de la carte d'identité cible ou de ladite carte d'identité du même type que la carte d'identité cible, et étant stockée à l'avance, et
l'au moins une parmi les première et deuxième images capturées délivrées en sortie lors du traitement de sortie d'image est utilisée pour une identification personnelle de l'utilisateur.

2. Programme selon la revendication 1, dans lequel
le deuxième traitement de détection est exécuté après que l'image capturée qui satisfait à la première condition prédéterminée est détectée.

3. Programme selon la revendication 2, amenant en outre l'ordinateur à exécuter
un traitement de sortie de guide consistant à délivrer en sortie un guide qui invite à effectuer un changement d'angle de la carte d'identité cible vers le deuxième angle prédéterminé après que l'image capturée qui satisfait à la première condition prédéterminée est détectée, dans lequel
le deuxième traitement de détection est exécuté après le traitement de sortie de guide.

4. Programme selon l'une quelconque des revendications 1 à 3, dans lequel l'image capturée comporte la carte d'identité cible et un arrière-plan de la carte d'identité cible, et
la deuxième condition prédéterminée comporte en outre une condition selon laquelle un degré de coïncidence entre l'arrière-plan de la carte d'identité cible dans l'image capturée qui est une cible de traitement lors du deuxième traitement de détection et l'arrière-plan de la carte d'identité cible dans l'image capturée détectée lors du premier traitement de détection est égal ou supérieur à une valeur de référence.

5. Programme selon l'une quelconque des revendications 1 à 4, dans lequel l'image capturée qui est une cible de traitement lors du premier traitement de détection et l'image capturée qui est une cible de traitement lors du deuxième traitement de détection sont comprises dans une vidéo générée par la caméra.

6. Appareil d'analyse d'images (2000), comprenant :
une unité de détection (2020) qui exécute un premier traitement de détection consistant à détecter, à partir d'une ou de plusieurs images capturées générées par une caméra pour une identification personnelle d'un utilisateur, une première image capturée qui satisfait à une première condition prédéterminée, et un deuxième traitement de détection consistant à détecter, à partir des une ou plusieurs images capturées générées par la caméra, une deuxième image capturée qui satisfait à une deuxième condition prédéterminée ; et
une unité de sortie d'image (2400) qui délivre en sortie, lors de la détection de la première image capturée et de la deuxième image capturée, au moins l'une ou l'autre parmi les première et deuxième images capturées,
**caractérisé en ce que** :
la première condition prédéterminée comporte une condition selon laquelle une première région d'image comprise dans la première image capturée représente une surface d'une carte d'identité cible capturée à un premier angle prédéterminé et possède un premier degré de similarité avec une première caractéristique d'image égal ou supérieur à une valeur seuil prédéterminée, la première caractéristique d'image relevant de la carte d'identité cible ou d'une carte d'identité du même type que la carte d'identité cible, et étant stockée à l'avance,
la deuxième condition prédéterminée comporte une condition selon laquelle une deuxième région d'image comprise dans la deuxième image capturée représente l'une surface de la carte d'identité cible capturée à un deuxième angle prédéterminé et possède un deuxième degré de similarité avec une deuxième caractéristique d'image égal ou supérieur à la valeur seuil prédéterminée, la deuxième caractéristique d'image relevant de la carte d'identité cible ou de ladite carte d'identité du même type que la carte d'identité cible, et étant stockée à l'avance, et
l'au moins une parmi les première et deuxième images capturées délivrées en sortie lors du traitement de sortie d'image est utilisée pour une identification personnelle de l'utilisateur.

7. Appareil d'analyse d'images selon la revendication 6, dans lequel
le deuxième traitement de détection est exécuté après que l'image capturée qui satisfait à la première condition prédéterminée est détectée.

8. Appareil d'analyse d'images selon la revendication 7, comprenant en outre
une unité de sortie de guide qui délivre en sortie un guide qui invite à effectuer un changement d'angle de la carte d'identité cible vers le deuxième angle prédéterminé après que l'image capturée qui satisfait à la première condition prédéterminée est détectée, dans lequel
l'unité de détection exécute le deuxième traitement de détection après que le guide est délivré en sortie.

9. Appareil d'analyse d'images selon l'une quelconque des revendications 6 à 8, dans lequel
l'image capturée comporte la carte d'identité cible et un arrière-plan de la carte d'identité cible, et
la deuxième condition prédéterminée comporte en outre une condition selon laquelle un degré de coïncidence entre l'arrière-plan de la carte d'identité cible dans l'image capturée qui est une cible de traitement lors du deuxième traitement de détection et l'arrière-plan de la carte d'identité cible dans l'image capturée détectée lors du premier traitement de détection est égal ou supérieur à une valeur de référence.

10. Appareil d'analyse d'images selon l'une quelconque des revendications 6 à 9, dans lequel
l'image capturée qui est une cible de traitement lors du premier traitement de détection et l'image capturée qui est une cible de traitement lors du deuxième traitement de détection sont comprises dans une vidéo générée par la caméra.

11. Procédé de commande qui est exécuté par un ordinateur, comprenant :
une première étape de détection consistant à détecter (S104), à partir d'une ou de plusieurs images capturées générées par une caméra pour l'identification personnelle d'un utilisateur, une première image capturée qui satisfait à une première condition prédéterminée ;
une deuxième étape de détection consistant à détecter (S104), à partir des une ou plusieurs images capturées générées par la caméra, une deuxième image capturée qui satisfait à une deuxième condition prédéterminée ; et
une étape de sortie d'image consistant à délivrer en sortie (S110), lors de la détection de la première image capturée et de la deuxième image capturée, au moins l'une ou l'autre parmi les première et deuxième images capturées,
**caractérisé en ce que** :
la première condition prédéterminée comporte une condition selon laquelle une première région d'image comprise dans la première image capturée représente une surface d'une carte d'identité cible capturée à un premier angle prédéterminé et possède un premier degré de similarité avec une première caractéristique d'image égal ou supérieur à une valeur seuil prédéterminée, la première caractéristique d'image relevant de la carte d'identité cible ou d'une carte d'identité du même type que la carte d'identité cible, et étant stockée à l'avance,
la deuxième condition prédéterminée comporte une condition selon laquelle une deuxième région d'image comprise dans la deuxième image capturée représente l'une surface de la carte d'identité cible capturée à un deuxième angle prédéterminé et possède un deuxième degré de similarité avec une deuxième caractéristique d'image égal ou supérieur à la valeur seuil prédéterminée, la deuxième caractéristique d'image relevant de la carte d'identité cible ou de ladite carte d'identité du même type que la carte d'identité cible, et étant stockée à l'avance, et
l'au moins une parmi les première et deuxième images capturées délivrées en sortie lors du traitement de sortie d'image est utilisée pour une identification personnelle de l'utilisateur.

12. Procédé de commande selon la revendication 11, dans lequel
la deuxième étape de détection est exécutée après que l'image capturée qui satisfait à la première condition prédéterminée est détectée.

13. Procédé de commande selon la revendication 12, comprenant en outre
une étape de sortie de guide consistant à délivrer en sortie un guide qui invite à effectuer un changement d'angle de la carte d'identité cible vers le deuxième angle prédéterminé après que l'image capturée qui satisfait à la première condition prédéterminée est détectée, dans lequel
la deuxième étape de détection est exécutée après l'étape de sortie de guide.

14. Procédé de commande selon l'une quelconque des revendications 11 à 13, dans lequel
l'image capturée comporte la carte d'identité cible et un arrière-plan de la carte d'identité cible, et
la deuxième condition prédéterminée comporte en outre une condition selon laquelle un degré de coïncidence entre l'arrière-plan de la carte d'identité cible dans l'image capturée qui est une cible de traitement lors de la deuxième étape de détection et l'arrière-plan de la carte d'identité cible dans l'image capturée détectée lors de la première étape de détection est égal ou supérieur à une valeur de référence.

15. Procédé de commande selon l'une quelconque des revendications 11 à 14, dans lequel
l'image capturée qui est une cible de traitement lors de la première étape de détection et l'image capturée qui est une cible de traitement lors de la deuxième étape de détection sont comprises dans une vidéo générée par la caméra.
